Europäisches Patentamt

European Patent Office

Office européen des brevets

(19)

(11) Numéro de publication: **0 265 317**
**A1**

## (12) DEMANDE DE BREVET EUROPEEN

(21) Numéro de dépôt: 87402234.6

(22) Date de dépôt: 07.10.87

(51) Int. Cl.⁴: **F 16 B 1/00**
F 16 H 25/20
// B27B27/10, B60N1/06

(30) Priorité: 13.10.86 FR 8614178

(43) Date de publication de la demande:
27.04.88 Bulletin 88/17

(84) Etats contractants désignés: **DE ES GB IT SE**

(71) Demandeur: **ROCKWELL-CIM**
**6, rue Barbès Boite Postale 70**
**F-92302 Levallois Cedex (FR)**

(72) Inventeur: **Periou, Pierre**
**15, les Boccages Bruns**
**F-95000 Cergy Pontoise (FR)**

(74) Mandataire: **Martin, Jean-Paul et al**
**c/0 CABINET LAVOIX 2, Place d'Estienne d'Orves**
**F-75441 Paris Cedex 09 (FR)**

(54) **Dispositif linéaire de réglage rapide et de blocage d'une pièce mobile par rapport à une pièce fixe, applicable notamment au réglage de guide de table de machines à bois.**

(57) Ce dispositif comprend au moins un couple d'éléments vis-écrou (8, 12) coopérant avec les deux pièces fixe et mobile, dont l'angle de vis est suffisamment élevé pour que le rendement de la translation vers la rotation soit légèrement positif, et qui est pourvu de moyens de verrouillage (23, 31, 29, 32) de l'élément rotatif (12) du couple après réglage de la position de la pièce mobile. Ce système permet le blocage de la pièce mobile dans la position choisie par un effort relativement faible comparativement à ceux supportés par le dispositif.

FIG.18

## Description

Dispositif linéaire de réglage rapide et de blocage d'une pièce mobile par rapport à une pièce fixe, applicable notamment au réglage de guide de table de machines à bois

La présente invention a pour objet un dispositif linéaire de réglage rapide et de blocage d'une pièce mobile par rapport à une pièce fixe.

Un tel dispositif, constituant un vérin mécanique, est susceptible de recevoir des applications extrêmement nombreuses, par exemple pour régler le guide d'une table de machine à bois, ou encore pour le réglage des positions des éléments d'un siège, notamment dans un véhicule automobile, un bateau ou un avion.

On connait par le brevet français 2 567 562 un système de réglage de siège au moyen de la combinaison d'une vis et d'une roue dentée, équipé de patins de blocage actionnés par un ressort. Cependant, un tel dispositif présente, en pratique, une tenue aux efforts insuffisante et de plus les patins se révèlent non viables, car ils nécessitent un ressort trop important. En ce qui concerne la tenue aux efforts que doit pouvoir présenter un tel système de réglage, il convient de préciser qu'il doit pouvoir résister à un choc frontal du véhicule à 60 km/h, correspondant à une décéleration de 20 G. Or, cette réalisation connue ne peut résister à un tel choc.

On connait également une autre réalisation comportant un axe traversant des rondelles de blocage susceptibles d'être actionnées chacune par un ressort qui les applique sur l'axe, de manière à bloquer ce dernier. Un tel dispositif est onéreux, car les rondelles doivent être constituées en des métaux nobles, plus durs que celui de l'axe. De plus, ces rondelles sont difficiles à usiner en raison des tolérances serrées qui doivent être respectées entre les diamètres des rondelles et celui de l'axe. En revanche, si ces tolérances sont effectivement respectées, ce dispositif présente l'avantage de résister à des décélérations brutales atteignant 20 G environ.

L'invention a donc pour but de proposer un dispositif linéaire constituant un vérin mécanique de réglage rapide d'une pièce mobile par rapport à une pièce fixe, qui puisse résister à des chocs brutaux de l'ordre de grandeur indiqué ci-dessus et qui soit en outre de fabrication relativement peu difficile et onéreuse.

Suivant l'invention, ce dispositif est caractérisé en ce qu'il comprend au moins un couple d'éléments vis-écrou coopérant avec les deux pièces fixe et mobile, dont l'angle de la ou des vis est suffisamment élevé pour que le rendement de la translation vers la rotation soit légèrement positif, et qui est pourvu de moyens de verrouillage de l'élément rotatif de couple vis-écrou après réglage de la position de la pièce mobile.

Suivant un premier mode de réalisation, la vis est mobile en translation, fixe en rotation et solidaire de la pièce mobile, et traverse un écrou fixe en translation, guidé en rotation dans un boîtier solidaire de ladite pièce fixe et susceptible d'être muni des moyens de verrouillage de l'écrou.

Suivant un second mode de réalisation de l'invention, le dispositif comprend une vis mobile en translation et fixe en rotation, un écrou taraudé et fileté suivant deux pas contraires et une noix taraudée traversée par l'écrou, cette noix étant apte à être solidarisée avec la pièce mobile à régler, tandis que la vis est solidaire de la pièce fixe, l'écrou étant mobile à la fois en translation et en rotation lorsqu'un effort axial est exercé sur la noix par la pièce mobile et la noix est susceptible de porter un système de verrouillage de l'écrou.

Suivant un troisième mode de réalisation de l'invention, le dispositif comporte un écrou dans lequel sont agencés deux taraudages de pas contraires et qui coopèrent chacun avec une vis, ces deux vis ayant des pas inverses, et l'écrou est monté rotatif dans un boîtier de support traversé par les vis, de telle sorte que, l'une des vis étant solidaire de la pièce mobile, l'écrou soit déplaçable à la fois en rotation et en translation sous l'action de l'effort axial exercé sur la vis solidaire de la pièce mobile à régler, et le boîtier est muni de moyens de verrouillage de l'écrou.

Selon un quatrième mode de réalisation de l'invention, la vis porte deux filetages à pas contraires qui coopèrent chacun avec un écrou dont l'un est relié la pièce fixe et l'autre à la pièce mobile à régler, de telle sorte que l'effort exercé sur l'écrou mobile en translation à partir de la pièce mobile déplace la vis à la fois en translation et en rotation, la vis traversant un boîtier pouvant être muni des moyens de verrouillage de ladite vis.

A titre d'exemple parmi les nombreuses applications possibles du dispositif linéaire de réglage selon l'invention, un siège de véhicule peut être équipé, pour le réglage de l'inclinaison de son dossier par rapport à son assise, de deux dispositifs linéaires selon l'invention, articulés d'une part sur les extrémités inférieures de l'ossature de dossier et sur l'assise d'autre part. Pour le réglage en hauteur de l'assise, deux dispositifs de réglage sont articulés d'une part sur l'assise et d'autre part sur des glissières mobiles solidaires de l'assise, coulissant dans des glissières fixées au plancher. Pour le ré glage longitudinal de l'assise, deux dispositifs selon l'invention sont articulés, d'une part sur les deux glissières fixes, et d'autre part sur des biellettes liées à l'assise.

Le calcul et les essais effectués ont montré que, après le choix d'un angle de vis convenable (c'est-à-dire de l'angle d'inclinaison des filets de la vis sur une perpendiculaire à l'axe de la vis), une force de poussée axiale brutalement appliquée sur le couple vis-écrou se traduit, au niveau des organes de verrouillage, par un effort radial pouvant être réduit à 10% environ de la poussée axiale subie. Dans ces conditions, les efforts radiaux effectivement transmis permettent au vérin mécanique selon l'invention de résister à un choc frontal de l'ordre de grandeur indiqué ci-dessus.

D'autres particularités et avantages de l'invention apparaitront au cours de la description qui va suivre, faite en référence aux dessins annexés qui en illustrent à titre d'exemples non limitatifs plusieurs formes de réalisation :

- les Figures 1 à 4 sont des vues simplifiées mi-coupe axiale, mi-élévation de quatre formes de réalisation du dispositif linéaire de réglage conforme à l'invention;

- la Figure 5 est une vue en coupe axiale d'un dispositif du type de celui de la Figure 1, équipé d'un premier mode de réalisation d'un système de verrouillage;

- les Figures 6 et 7 sont des vues respectivement de dessus et en élévation latérale du dispositif de la Figure 5;

- la Figure 8 est une vue en coupe transversale suivant 8-8 de la Figure 5;

- la Figure 9 est une vue en plan partielle à échelle agrandie d'un détail du système de verrouillage du dispositif des Figures 5 à 9;

- la Figure 10 est une vue en coupe et élévation partielles suivant 10-10 de la Figure d'un dispositif de réglage rapide du type de celui de la Figure 1, équipé d'un second mode de réalisation du système de verrouillage;

- la Figure 11 est une vue en plan et en coupe partielle suivant 11-11 de la Figure 10;

- la Figure 12 est une vue en coupe transversale suivant 12-12 de la Figure 14 d'un dispositif de réglage du type de celui de la Figure 1, équipé d'un autre système de verrouillage;

- la Figure 13 est une vue mi-coupe axiale, mi-élévation avec arrachement du dispositif de la Figure 12;

- la Figure 14 est une vue en élévation longitudinale avec arrachement partiel du dispositif des Figures 12 et 13 et de son système de verrouillage;

- la Figure 15 est une vue en élévation longitudinale et coupe partielle d'un autre système de verrouillage du dispositif de réglage selon l'invention;

- la Figure 16 est une vue en coupe transversale suivant 16-16 de la Figure 15;

- la Figure 17 est une vue en coupe transversale suivant 17-17 de la Figure 15;

- la Figure 18 est une vue en coupe axiale d'un mode de réalisation du type de celui de la Figure 2, du dispositif de réglage rapide selon l'invention, équipé d'un autre système de verrouillage;

- la Figure 19 est une vue en coupe longitudinale suivant 19-19 de la Figure 18;

- la Figure 20 est une vue en élévation en bout du dispositif selon l'invention suivant la direction de la flèche F de la Figure 18;

- la Figure 21 est une vue en coupe transversale suivant 21-21 de la Figure 18;

- la Figure 22 est une vue en perspective d'une portion de cylindre verrouilleur, permettant le blocage en rotation de la noix du dispositif de réglage des Figures 18 à 21;

- la Figure 23 est une vue en coupe transversale suivant 23-23 de la Figure 18;

- la Figure 24 est une vue en perspective simplifiée de l'ossature d'une siège de véhicule équipé de plusieurs dispositifs linéaires de réglage selon l'invention;

- les Figures 25 et 26 sont des vues respectivement de dessus en plan et en élévation longitudinale illustrant l'implantation du dispositif de réglage des Figures 18 à 24 sur un siège de véhicule pour le réglage longitudinale de l'assise de ce siège;

- la Figure 27 est une vue en élévation en bout, avec coupe partielle, du dispositif des Figures 25 et 26;

- la Figure 28 est une vue de dessus en plan d'une table de machine à bois équipée, pour le réglage de son guide, d'un dispositif selon l'invention;

- la Figure 29 est une vue en coupe axiale verticale d'un tabouret réglable en hauteur au moyen d'un dispositif de réglage selon l'invention.

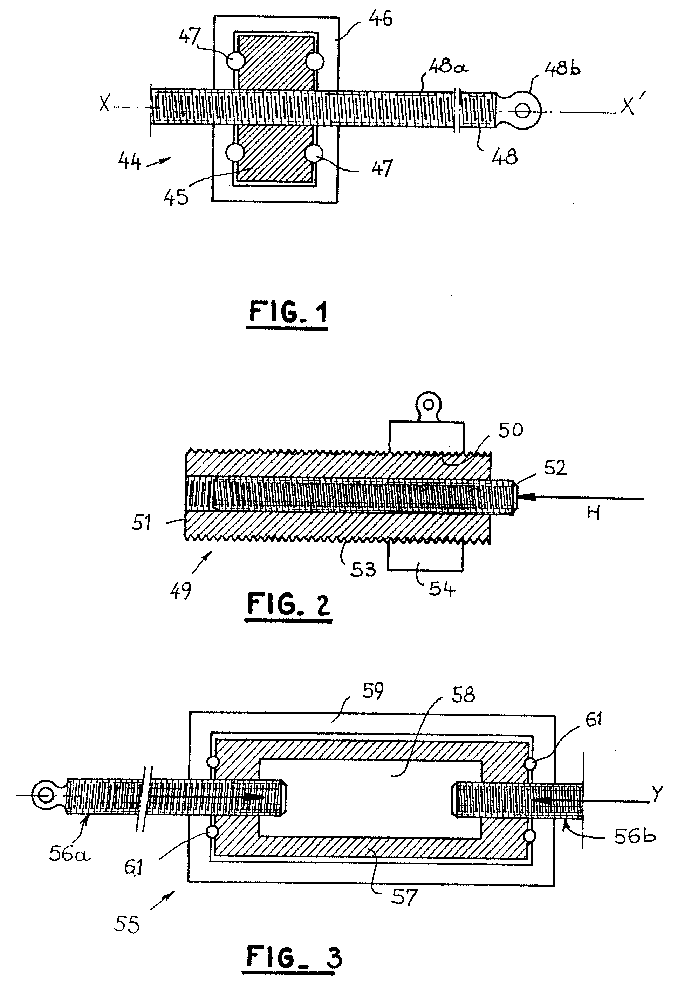

On a représenté à la Figure 1 un premier mode de réalisation du dispositif linéaire de réglage rapide selon l'invention, d'une pièce mobile par rapport à une pièce fixe non représentées. Ce dispositif comprend une vis 48 qui traverse un écrou 45 disposé dans un logement intérieur d'un boîtier 46 avec interposition de chemins de billes 47 de roulement.

Le perçage de l'écrou 45 est pourvu d'un taraudage en prise avec le filetage 48a de la vis 48 et l'écrou 45, et bloqué en translation axiale à l'intérieur du boîtier 46. Il est donc mobile uniquement en rotation autour de l'axe X-X' de la vis 48, laquelle est mobile en translation et fixe en rotation. La vis 48 comporte un oeillet terminal 48b permettant de la solidariser avec la pièce mobile à régler, tandis que le boîtier 46 est solidaire de la pièce fixe. L'angle de la vis 48, c'est-à-dire l'angle d'inclinaison de ses filets sur une perpendiculaire à l'axe X-X' (également appelé angle d'hélice ou angle de filet) est choisi de manière à être suffisamment élevé pour que le rendement de la translation de la vis 48 vers la rotation de l'écrou 45 soit légèrement positif. Le dispositif peut être muni d'un système de verrouillage non représenté, permettant de bloquer l'écrou 45 en rotation et par conséquent la vis '8 en translation, lorsque celle-ci est dans la position correspondant au réglage voulu pour la pièce mobile. Une poussée axiale sur la vis 48 dans l'un ou l'autre sens se traduit, dans ce dispositif, uniquement par une rotation de l'écrou 45 dans son boîtier 46.

Dans le second mode de réalisation du dispositif illustré à la Figure 2, le dispositif 49 comprend une vis 52 mobile en translation et fixe en rotation, un écrou 51 présentant un taraudage coopérant avec le filetage de la vis ainsi qu'un filetage extérieur 53 dont le pas est contraire à celui du taraudage intérieur traversé par la vis 52. L'écrou 51 traverse une noix 54 pourvue d'un taraudage 50 et apte à être solidarisée avec la pièce fixe (non représen tée) à régler, tandis que la vis 52 est solidaire de la pièce mobile. Ainsi l'écrou 51 est mobile à la fois en translation et en rotation lorsqu'un effort axial H est exercé sur la vis 52 par la pièce mobile. La noix 54 est susceptible de porter un système de verrouillage ( non représenté) de l'écrou 51. Comme dans la réalisation précédente, l'angle de la vis 52 est choisi de manière à être suffisamment élevé pour que le rendement de la translation vers la rotation soit légèrement positif.

La Figure 3 illustre un troisième mode de réalisation du dispositif de réglage, dans lequel celui-ci comporte en écrou 57 présentant un logement intérieur 58 et dans les extrémités duquel sont agencés deux taraudages de pas contraires qui coopèrent chacun avec une vis 56a, 56b, ces deux vis ayant des pas inverses. L'écrou 57 est monté rotatif dans un boîtier 59 de support également traversé par le vis 56a, 56b. L'angle de celles-ci étant choisi pour que le rendement de la translation vers la rotation soit légèrement positif, et l'une des vis 56a, 56b étant solidaire de la pièce mobile (non représentée) à régler, tandis que l'autre vis est solidaire de la pièce fixe, l'écrou 57 est déplaçable à la fois en rotation et en translation sous l'action d'un effort axial tel que Y, exercé sur la vis solidaire de la pièce mobile. Bient entendu, le boîtier 59 accompagne le mouvement en translation de l'écrou 57. Le boîtier 59 peut être muni de moyens de verrouillage (non représentés) de l'écrou 57, et par conséquent de blocage de la vis reliée à la pièce mobile.

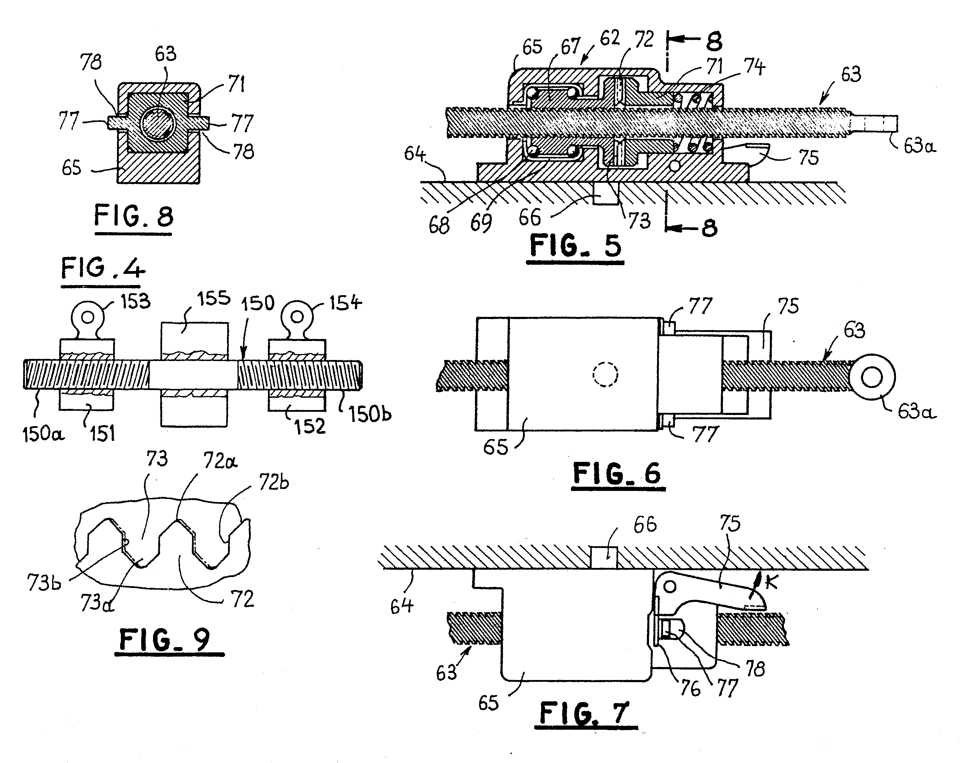

Dans le quatrième mode de réalisation illustré à la Figure 4, le dispositif de réglage comprend une vis 150 portant deux filetages 150a, 150b à pas contraires qui coopèrent chacun avec un écrou 151, 152 dont l'un est relié à la pièce fixe et l'autre à la pièce mobile à régler, par des oeillets respectifs 153, 154. La vis 150 traverse un boîtier 155 pouvant être muni de moyens de verrouillage de la vis 150. Un effort exercé parallèlement à l'axe de la vis 150 sur l'écrou (153 ou 154) mobile en translation, à partir de la pièce mobile, déplace la vis 150 à la fois en translation et en rotation.

Dans le réalisation illustrée aux Figures 5 à 9, le dispositif de réglage ou vérin mécanique 62 est du type de celui de la Figure 1 et comprend une vis 63 dont l'extrémité 63a est adaptée pour être articulée sur une pièce à régler, mobile par rapport au support fixe 64 du dispositif 62. La vis 63 traverse de part en part un boîtier 65 articulé par un pivot 66 sur le support 64. Le pivot 66 est perpendiculaire à l'axe de la vis 63, afin de permettre le pivotement de l'ensemble du dispositif 62 autour du pivot 66 pour accompagner les déplacements de la pièce à régler.

La vis 63 traverse également axialement un écrou 67 logé dans le boîtier 65 et fixe en translation, guidé en rotation par des billes 58 de roulement maintenues par une douille 69. L'écrou 67 est maintenu bloqué en rotation, lorsque le dispositif est au repos, par un élément verrouilleur 71 traversé axialement par la vis 63 et portant des dents ou crabots radiaux 72 susceptibles de venir en prise avec des carbots correspondants 73 de l'écrou 67, sous la poussée d'un ressort 74 disposé dans le boîtier 65 coaxialement à la vis 63 et prenant appui sur le fond de ce boîtier. Le déverrouillage de l'écrou 67 peut être obtenu par un levier 75 articulé sur le boîtier 65 autour d'un axe transversal de celui-ci, et qui est muni d'oreilles latérales 76 pouvant entraîner en translation axiale deux ergots 77 solidaires du verrouilleur 71 et faisant saillie latéralement à travers la paroi du boîtier 65 dans des boutonnières correspondantes 78.

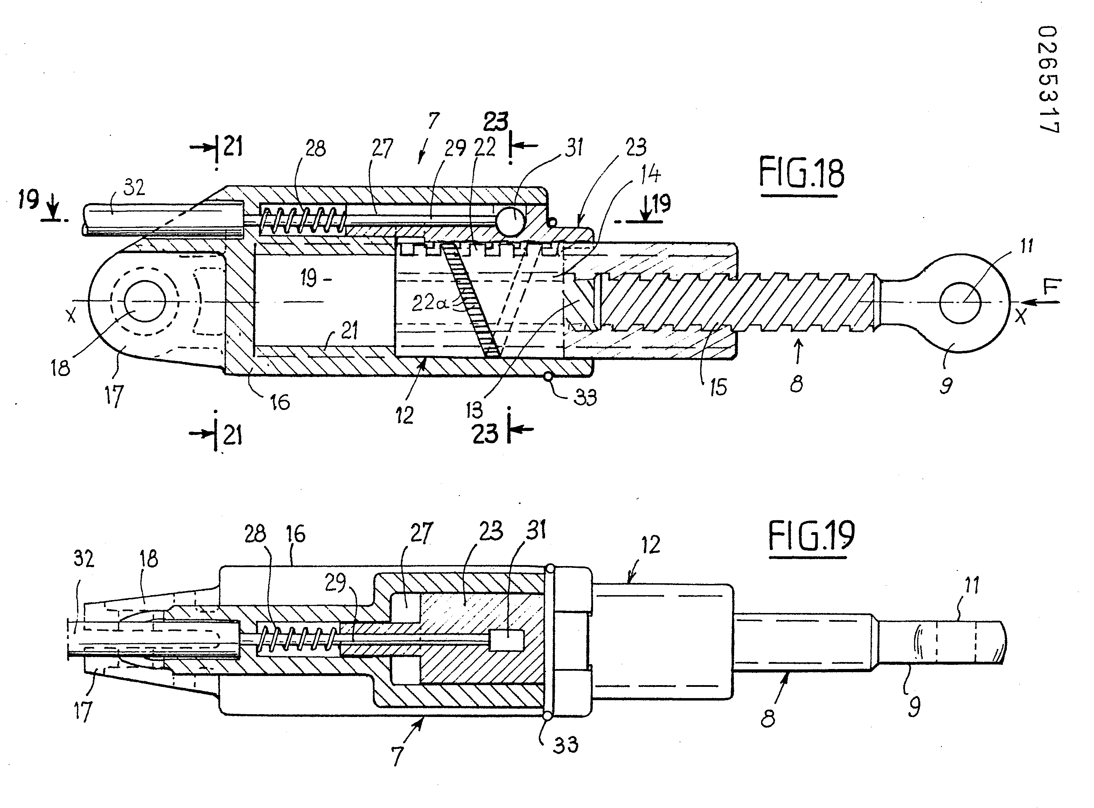

Ainsi, lorsqu'on fait basculer le levier 75 dans le sens de la flèche K (Figure 18), les oreilles 76 font coulisser les ergots 77 et le verrouilleur 71, autour de la vis 63 dans le sens qui écarte le verrouilleur 71 de l'écrou 67, ce qui dégage les crabots 72 des crabots 73 et rend l'écrou 67 libre en rotation.

on remarque (Figure 9) que les dents ou crabots 72, 73 présentent des extrémités pointues 72a, 73a complémentaires, prolongées latéralement par des plats 72b, 73b permettant d'empêcher un décrabotage naturel éventuel.

Le déverrouillage de l'écrou 67 par manoeuvure du levier 75 s'effectue contre la force de rappel du ressort 74, qui replace automatiquement le verrouilleur 71 en prise avec l'écrou 67 et le bloque en rotation dès que le levier 75 est relâché.

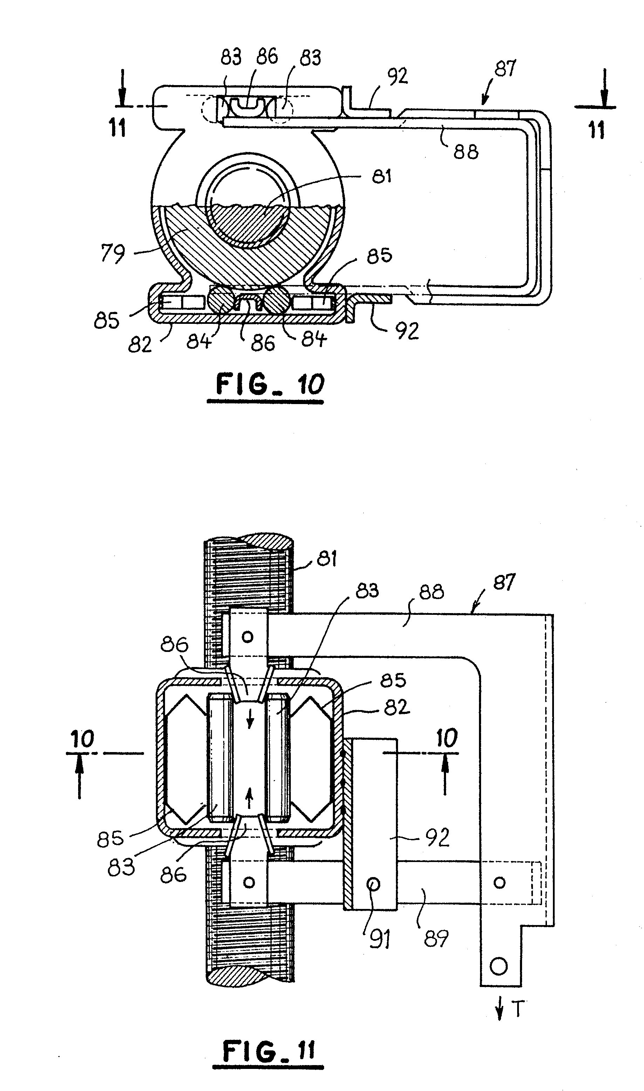

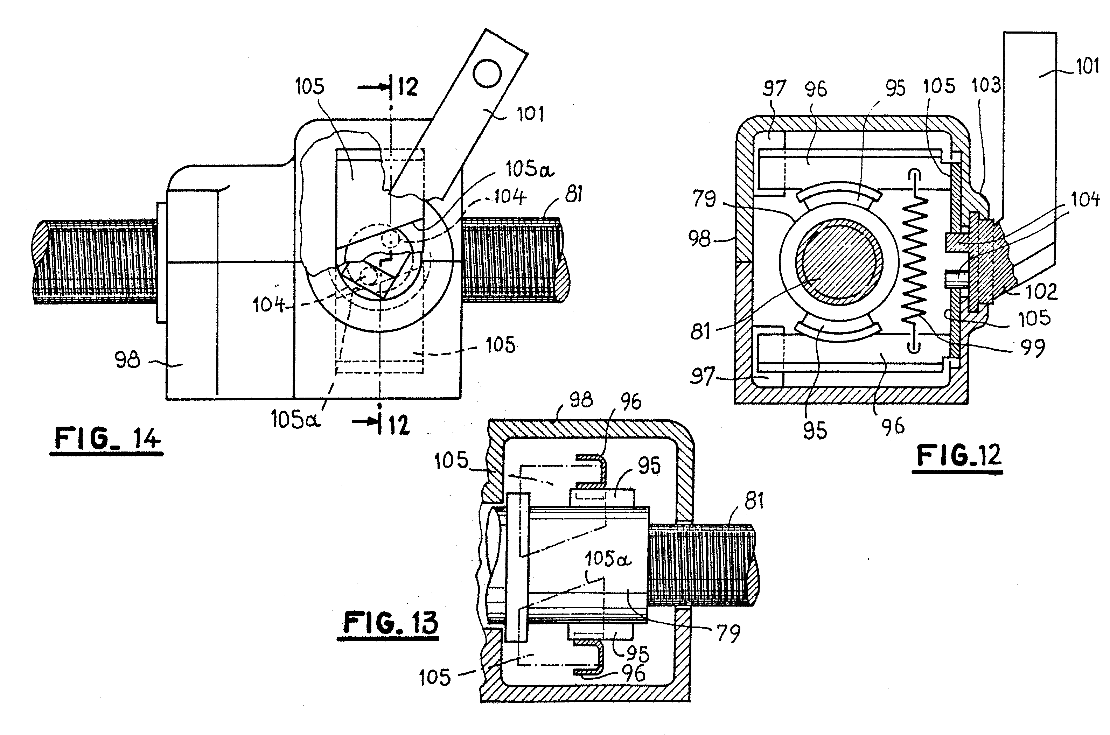

La forme de réalisation des Figures 10 et 11 montre un dispositif de réglage du type de celui de la Figure 1, équipé de moyens de déverrouillage en rotation de l'écrou 79, traversé par une vis 81. Ces moyens comprennent, disposées de manière diamètralement opposée, de part et d'autre de l'écrou 79 entre celui-ci et les parois longitudinales d'un boîtier 82, deux paires de rouleaux parallèles 83, 84, élastiquement sollicités en appui sur l'écrou 79 par des ressorts à lames 85 prenant appui sur la paroi du boîtier 82, de façon à bloquer l'écrou 79 en rotation.

Le dispositif comprend également des coins 86 engagés entre les extrémités opposées des rouleaux 83, 84, ainsi que des moyens pour faire avancer les coins 85 entre les rouleaux de manière à les écarter et à débloquer ainsi l'écrou 79, ou pour escamoter ces coins 86 afin de verrouiller l'écrou 79. Dans l'exemple illustré aux Figures 10 et 11, ces moyens comprennent une pince 87 formée par deux mâchoires 88, 89, la mâchoire 88 étant en L et la mâchoire 89 étant articulée sur une extrémité de la mâchoire 88. Chaque extrémité des mâchoires 88, 89 porte un coin 86, et la mâchoire 89 est de plus articulée en 91 sur un élément 92 fixé extérieurement au boîtier 82, par exemple par soudure.

Lorsque ce système de verrouillage est au repos, comme représenté à la Figure 11, les ressorts 85 appliquent les rouleaux 83, 84 sur l'écrou 79 bloqué en rotation. Si maintenant on exerce sur la mâchoire 88 un effort T parallèle à l'axe de la vis 81, l'ensemble de la mâchoire 88 se déplace dans le sens de l'effort T parallèlement à la vis 81, de sorte que le coin 86 de la mâchoire 88 s'enfonce entre les rouleaux 83. En même temps, la mâchoire 89 bascule autour de son articulation fixe 91, de sorte que le coin associé 86 pénètre également entre les rouleaux 83, 84. Ces derniers sont écartés de l'écrou 79 à l'encontre de la force de rappel des ressorts 85, et l'écrou 79 est libéré en rotation.

Le dispositif de commande du déverrouillage de l'écrou 79 du vérin mécanique également du type de celui de la Figure 1, représenté aux Figures 12 à 14, comprend une paire de mâchoires 95 respectivement solidaires d'un profilé 96 et pouvant s'écarter de l'écrou 79 en glissant sur des guides 97 intérieurs du boîtier 98. Les mâchoires 95 présentent une courbure égale à celle de l'écrou cylindrique 79 afin de pouvoir s'appliquer sur celui-ci, sous l'action d'un ressort 99, et sont susceptibles d'être écartées de l'ecrou 79 par la rotation d'un levier 101 dont une extrémité coudée 102 est engagée rotativement dans une excroissance 103 de la paroi du boîtier 98. L'extrémité 102 porte deux doigts 104 en contact chacun avec une plaque 105 solidaire d'une extrémité du profilé correspondant 96. Chaque plaque 105 présente un bord 105a incliné sur l'axe de la vis 81 et en contact avec le doigt correspondant 104. Au repos, le ressort 99 maintient les mâchoires 95 appliquées sur la surface de l'écrou 79, qui est ainsi verrouillé en rotation. Lorsqu'on abaisse le levier 101, les doigts 104 exercent sur les plaques respectives 105 des forces de sens opposés, qui écartent l'une de l'autre les mâchoires 95, l'écrou 79 étant ainsi déverrouillé en rotation.

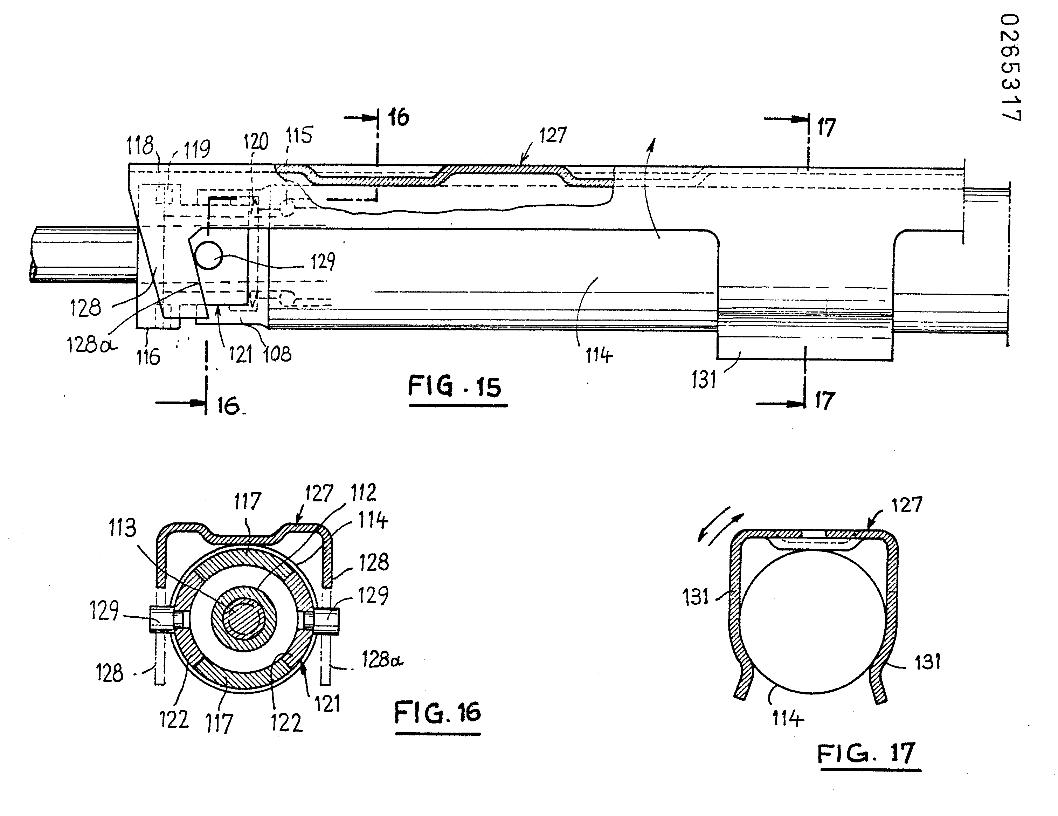

Les figures 15 à 17 représentent un autre mode de réalisation du dispositif de réglage selon l'invention, une moitié seulement de celui-ci étant visible à la Figure 15 et la seconde moitié étant symétrique de la première par rapport à un plan transversal médian. Ce dispositif est du type de celui de la Figure 3 et comprend un écrou 112 traversé par une vis 113 et logé dans un boîtier 114, cet écrou étant guidé en rotation par des chemins de billes 115. L'extrémité 116 de l'écrou 112 fait saillie axialement à l'extérieur du boîtier 114 et comporte deux secteurs cylindriques identiques 117, qui s'étendent axialement entre l'extrémité du boîtier 114 et la partie terminale 116. Sur son côté tourné vers le boîtier 114, cette dernière est munie d'une denture 118 dans laquelle peut venir en prise une denture complémentaire 119 d'un crabot 121 constitué de deux secteurs 122 complémentaires des secteurs 117 entre lesquels ils peuvent coulisser.

Le crabot 121 est soumis à l'action d'un organe élastique 120, qui prent appui sur l'extrémité du boîtier 114 et pousse le crabot 121 axialement en engagement de denture avec la denture 118, ce qui maintient normalement celle-ci verrouillée en rotation.

Le dispositif de commande du déverrouillage de l'écrou 112 comprend, pour chacune des deux vis 113, une pièce 127, constituée par exemple d'une tôle emboutie, qui enveloppe partiellement le boîtier 114. Chaque pièce 127 est munie, à son extrémité située en regard du crabot 121, de deux ailes latérales 128 présentant chacune un bord 128a incliné sur un plan perpendiculaire à l'axe de la vis 113 et en contact avec un doigt latéral 129 saillant latéralement du crabot 121. A son extrémité opposée aux ailes 128, la tôle 127 est munie de deux extensions latérales 131 appliquées contre le boîtier 114 et permettant la préhension manuelle de la tôle 127 pour la faire pivoter autour du boîtier 114.

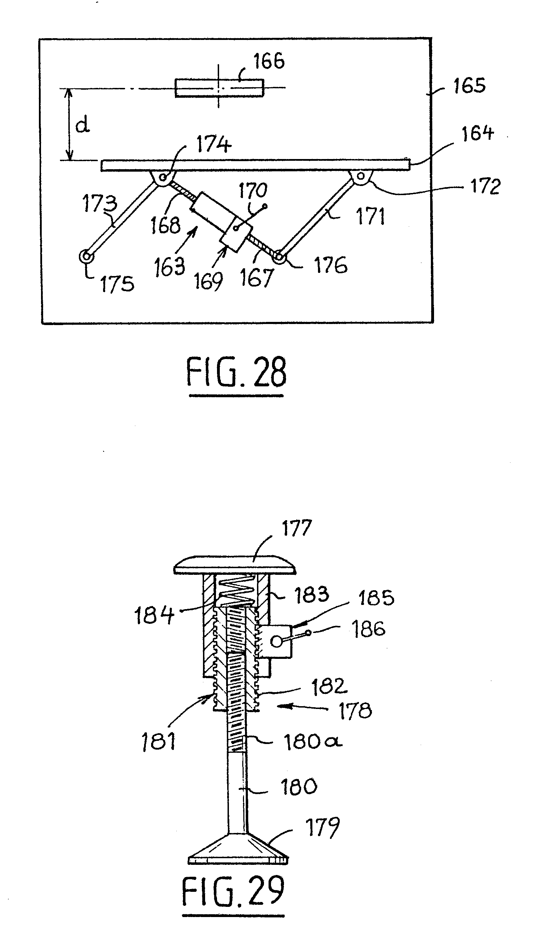

L'organe élastique 120 tendant à maintenir le crabot 121 en prise avec les dents 119, une rotation de la tôle 127 dans le sens de la flèche portée sur la Figure 28, grâce aux extensions 131, fait tour]ner les ailes 128, de telle sorte que leurs bords 128a exercent sur les doigts 129 une force qui provoque le retrait axial du crabot 121 contre la sollicitation du ressort de rappel 120, ce qui déverrouille l'écrou 112. Inversement, lorsque l'organe de commande 127 est relâché, la pression du ressort 120 sur le crabot 121 provoque, par l'intermédiaire des doigts 129, le retour de la tôle 127 à sa position initiale et la verrouillage de l'écrou 112.

Description du mode de réalisation des Figures 18 à 23

Le vérin mécanique 7 comprend une vis 8 dont une extrémité 9 est percée d'une boutonnière 11, de manière à pouvoir être articulée sur la pièce mobile à régler, ou sur la pièce fixe, et un écrou 12 percé d'un logement axial 13 présentant un taraudage 14 adapté pour coopérer avec le filetage 15 de la vis 8. L'écrou 12 est lui-même logé dans un boîtier ou corps 16 rendu solidaire de l'une des deux pièces fixe et mobile par une oreille terminale 17 percée d'une boutonnière 18.

Dans le boîtier 16 est ménagé un logement axial 19 recevant l'écrou 12, et la paroi du logement 19 présente un filetage 21 adapté pour coopérer avec des filets 22 complémentaires de l'écrou 12 formés extérieurement à celui-ci, de manière à permettre à l'écrou 12 de tourner à l'intérieur du boîtier 16 autour de l'axe générale X-X du vérin mécanique 7, dans des conditions qui seront précisées ci-après. Dans l'exemple décrit, les filets 22 sont au nombre de trois.

D'autre part, le dispositif 7 est équipé de moyens de verrouillage et de déverrouillage de l'écrou 12, permettant de bloquer celui-ci en rotation ainsi que la vis 8 en translation, ou au contraire de libérer l'écrou 12 en rotation et ainsi permettre un déplacement en translation axiale de la vis 8 à l'intérieur de l'écrou 12. En effet, la vis 8 étant articulée par son extrémité 9 sur une pièce mobile ou fixe, ne peut tourner autour de son axe X-X, de sorte que, lorsque cette vis 8 est soumise à une poussée axiale F, elle ne peut se déplacer en translation axiale dans l'écrou 12 que si ce dernier est libre en rotation.

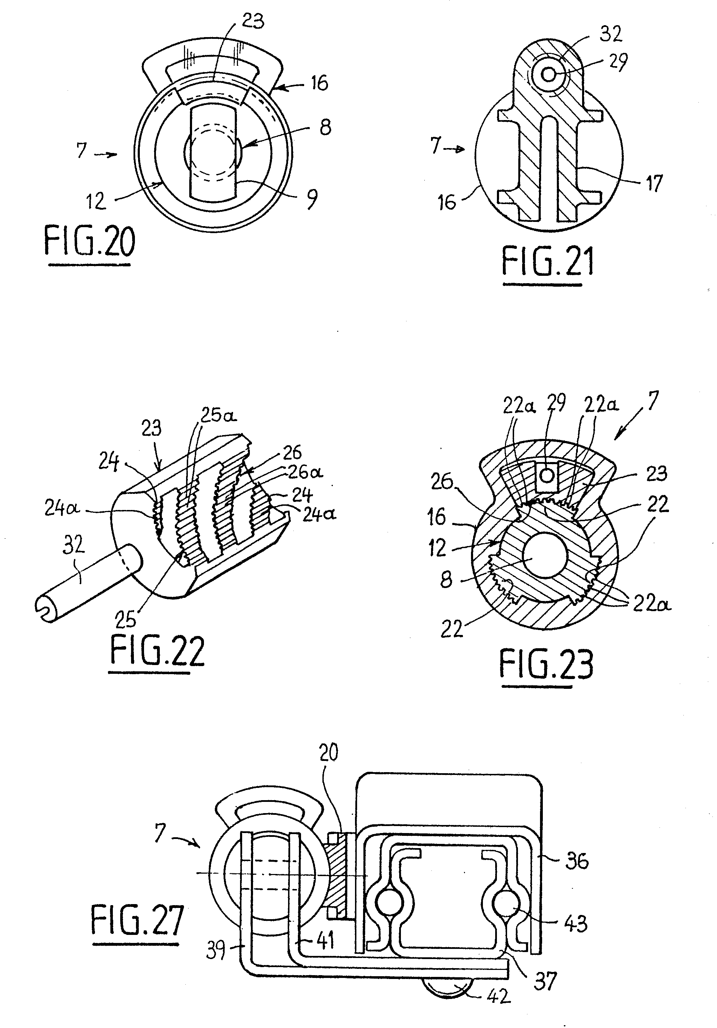

Dans l'exemple décrit, ces moyens de verrouillage de l'écrou 12 comprennent : une portion de cylindre verrouilleur 23 pourvue de filets intérieurs 24, 25, 26 conjugués des filets 22 de l'écrou 12 (donc également au nombre de 3 dans cet exemple), et dans ces deux séries de filets 22-26 sont réalisées des cannelures respectives 22a; 24a, 25a, 26a complémentaires, parallèles à l'axe X-X. Le cylindre verrouilleur 23 est logé dans un compartiment longitudinal 27 du boîtier 16, s'étendant parallèlement au logement 19. D'autre part, le filetage intérieur 21 est interrompu sur un secteur angulaire égal à celui occupé par la portion de cylindre verrouilleur 23, comme on le voit à la Figure 23. De ce fait, si le cylindre verrouilleur 23 se trouve dans une position axiale telle que ses filets 24-26 sont dans le prolongement radial des filets du filetage 21, les filets 24-26 forment avec ceux-ci un filetage unique. Ceci autorise donc la rotation de l'écrou 12 ainsi que son déplacement axial dans le boîtier 16 par coopération de ses filets 22 avec le filetage 21 mis en phase avec les filets 24-26.

Le verrouilleur 23 est sollicité par un organe élastique 28, constitué par un ressort hélicoîdal coaxial à un câble 29 dont une extrémité est rendue solidaire du verrouilleur 23 par un arrêt 31 disposé dans un évidement correspondant du verrouilleur 23. Le câble 29 s'étend ainsi dans le compartiment 27 et traverse le corps 16 à l'extérieur duquel il est enveloppé dans une graine 32. Le câble 29 est muni à son extrémité opposée à l'arrêt 31 d'un élément de commande (non représenté), par exemple une poignée manuelle. Le ressort 28 prend appui sur un fond du compartiment 27 et exerce sur une extrémité du verrouilleur 23 une poussée sensiblement parallèle à l'axe X-X, qui tend à maintenir le verrouilleur 23 en butée axiale contre un moyen de retenue tel qu'un jonc 33 partiellement logé dans une gorge correspondante de la périphérie du boîtier 16.

Le logement 27 est dimensionné de manière à autoriser des déplacements axiaux alternés du verrouilleur 23 et à guider par ses parois ces déplacements (Figure 19).

Le fonctionnement du dispositif de réglage 7 est le suivant :

La vis 8 étant articulée par son extrémité 9 sur une pièce mobile à régler et le boîtier 16 étant articulé par son extrémité 17 sur une pièce fixe par rapport à la pièce mobile (ou inversement), et le vérin 7 étant au repos, la poussée du ressort 28 sur le verrouilleur 23 maintient celui-ci en butée contre le jonc 33, dans une position axiale ou ses filets 24-26 sont décalés par rapport au filetage 21, d'1/6 du pas total des filets de ce filetage. De ce fait, les filets 24-26 sont en prise avec les filets 22 par emboîtement de leurs cannelures complémentaires 22a et 24a-26a respectives. Ainsi, l'écrou 12 est verrouillé en rotation dans le boîtier 16, et une poussée axiale F exercée sur la vis 8 ne permet pas à celle-ci d'exécuter une translation axiale dans l'écrou 12, la vis 8 restant donc immobilisée.

Si maintenant on veut régler la position de la pièce mobile sur laquelle est articulée la vis 8 (ou le corps 16), on exerce sur le câble 29 une trac tion à l'encontre de la force de rappel du ressort 28. Cette traction est transmise par l'arrêt 31 au verrouilleur 23 qui recule dans son compartiment 27, de sorte que les filets 24-26 et leurs cannelures 24a-26a se dégagent des filets 22. Au terms de ce retrait axial du verrouilleur 23, les filets 24-26 viennent se placer dans le prolongement radial des filets du filetage 21 qu'ils complètent pour former un filetage unique, permettant à l'écrou 12 de tourner librement dans le boîtier 16. Ainsi, après déverrouillage de l'écrou 12, une poussée axiale F sur la vis 8 se traduit par un double mouvement : la vis 8 provoque la rotation de l'écrou 12 à l'intérieur duquel elle s'enfonce par coopération des filetages 14 et 15, et l'écrou 12 exécute une translation axiale dans le boîtier 16 à l'intérieur duquel il s'enfonce.

Bient entendu, si une poussée axiale opposée à la poussée F est exercée sur la vis 8, cela provoque les mouvements relatifs inverses des précédents des pièces 8 et 12. Lorsque la pièce mobile a atteint la position désirée, on relâche le câble de commande 29, de sorte que le ressort 28 rappelle le verrouilleur 23 dans sa position initiale. Ses filets 24-26 viennent ainsi à nouveau en prise avec les filets 22 par emboîtement des cannelures 22a et 24a-26a, ce qui bloque à nouveau l'écrou 12 en rotation et la vis 8 en translation.

Les déplacements axiaux du verrouilleur 23 sont guidés par les parois longitudinales du logement 27 (Figure 3) et de même les déplacements du câble 29 sont guidés par un logement correspondant sur la surface du verrouilleur 23.

## Applications du dispositif linéaire de réglage rapide ou vérin mécanique selon l'invention

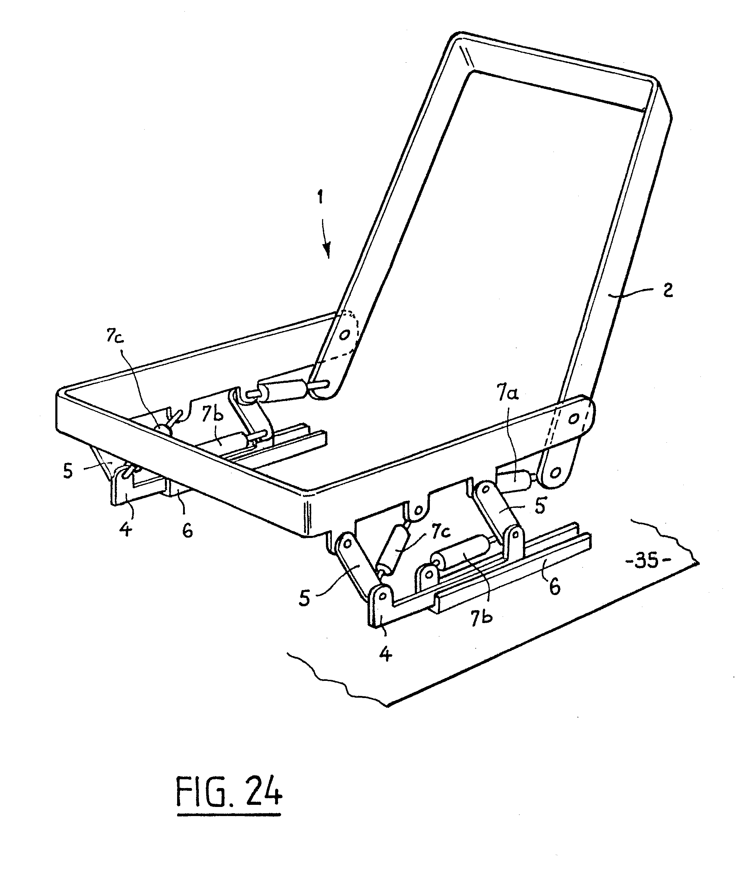

La Figure 24 illustre un exemple d'application du dispositif de réglage rapide selon l'invention au réglage des éléments constitutifs d'un siège, qui peut être celui d'un véhicule (automobiles, avions, bateaux), ou d'une installation fixe quelconque.

Ce siège comporte une ossature 1 constituée d'une armature 2 de dossier, d'une assise 3 sur laquelle est articulée l'armature 2, de deux glissières latérales 4, reliées chacune à l'assise 3 par deux biellettes 5 articulées sur l'assise 3 et sur les glissières 4, ces dernières étant montées coulissantes dans des glissières 6 fixées au plancher 35.

L'ossature 1 est équipée de plusieurs dispositifs linéaires de réglage constituant autant de vérins mécaniques permettant le réglage des trois éléments constitutifs du siège : deux vérins 7a sont articulés, d'une part sur les extrémités inférieures de l'armature 2, et sur l'assise 3 pour permettre le réglage de l'inclinaison de l'armature 2 et donc du dossier, deux vérins 7b sont articulés, d'une part sur les glissières fixes 6 et d'autre part sur les glissières mobiles 4 afin de permettre le réglage de la position longitudinale de l'assise 3 sur le plancher, et deux vérins 7c sont articulés, d'une part sur les glissières mobiles 4, et d'autre part su l'assise 3 pour permettre le réglage en hauteur de cette dernière.

Les boitiers des vérins 7a sont articulés sur l'assise 3 autour d'un axe perpendiculaire à la vis afin de pouvoir basculer autour de cet axe pour suivre les déplacements angulaires du dossier 2 sur lequel la vis est articulée. Inversement, cette dernière peut être articulée sur l'assise 3 et le boîtier sur le dossier 2.

Les boîtiers des vérins 7c sont adaptés pour être articulés sur les glissières 4 solidaires de l'assise 3 et qui peuvent coulisser dans les glissières fixes 6, tandis que les vis sont articulées sur l'assise 3, afin de permettre de régler la hauteur de l'assise 3 au-dessus du plancher 35. Bient entendu, cet agencement peut être inversé, les vis étant articulées sur les glissières 4 et les boîtiers articulés sur l'assise 3.

Enfin, les boîtiers des vérins 7b peuvent être solidarisés avec les glissières fixes 6 et les vis solidarisées avec l'assise 3, afind de permettre le réglage longitudinal de cette dernière. Inversement, les vis peuvent être solidarisées avec les glissières fixes 6, tandis que les boîtiers sont solidaires de l'assise 3.

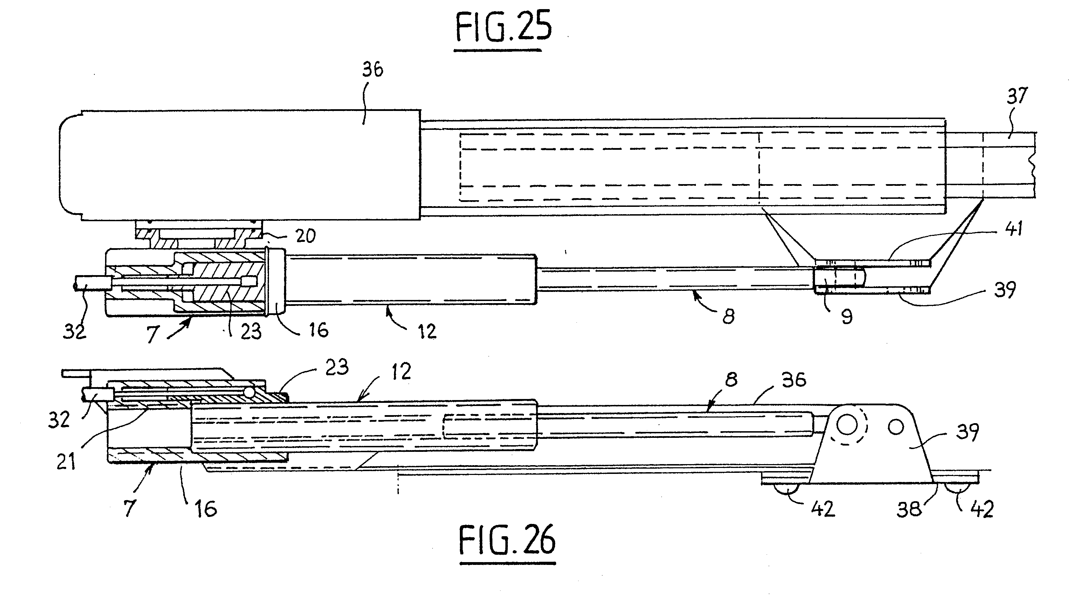

Les Figures 25 à 27 illustrent l'implantation d'un dispositif de réglage 7, donc conforme au mode de réalisation des Figures 18 à 23, par une attache 20 sur une glissière 26 pouvant coulisser sur une

glissière 37 fixée à un plancher, par exemple de véhicule, pour le réglage de la position longitudinale de l'assise (non représentée) du siège, le vérin 7 étant positionné à l'avant du siège. La vis 8 est représentée dans sa position de sortie maximum de l'écrou 12, lui-même dans sa position de sortie maximun du boîtier 16. L'extrémité 9 de cette vis est articulée sur deux cornières 39, 41 solidarisées avec la glissière fixe 37, par exemple par des rivest 42. Des billes de roulement 43 sont classiquement interposées entre les glissières 36 et 37.

La Figure 29 illustre l'application d'un dispositif 162 selon l'invention au réglage du guide 164 d'une table 165 de machine à bois, munie par exemple d'un scie circulaire 166, ou d'une toupie, ou d'une dégauchisseuse, etc. Jusqu'à présent, le réglage du guide 164 est assuré par un système à boutonnière et serrage par écrou, qui est avantageusement remplacé par le dispositif 163. Celui-ci est du type de la Figure 3, donc à deux vis 167, 168 et pourvu d'un système de verrouillage 169 à levier d'actionnement manuel 170. La vis 167 est articulée sur une biellette 171 elle-même articulée à son extrémité opposée sur une oreille 172 du guide 164. La vis 168 et une seconde biellette 173 sont articulées sur une seconde oreille 174 du guide 164, l'extrémité opposée de la biellette 173 étant articulée autour d'un pivot fixe 175, le pivot 176 d'articulation de la vis 167 et de la biellette 171 étant également fixe sur la table 165.

Les points d'articulation 172, 174, 175 et 176 constituent les sommets d'un parallélogramme dont deux 175 et 176 sont fixes, les deux autres étant déplaçables lorsque le système 169 est déverrouillé. On peut alors en effet faire pivoter les biellettes 171, 173, ce qui permet de déplacer le guide 164 parallèlement à lui-même et ainsi de faire varier la cote d entre celui-ci et la scie circulaire 166, la diagonale du parallélogramme variant au cours de ce déplacement.

Le système de verrouillage 169 est agencé pour pouvoir bloquer la rotation de l'écrou associé aux tiges 167, 168, cet écrou étant alors convenablement pourvu d'un filetage extérieur pouvant venir en prise avec celui du système de verrouillage 169.

La Figure 30 montre l'application de l'invention au réglage en hauteur de l'assise 177 d'un tabouret 178 dont le pied est constitué par un disque 179 d'appui sur le sol et d'une vis 180. Celle-ci fait partie d'un dispositif de réglage du type de celui de la Figure 2, qui comprend donc un écrou 181 présentant un taraudage qui coopère avec le filetage 180a de la vis 180, et un filetage 182 coopérant avec le taraudage d'un boîtier 183 portant à son extrémité supérieure l'assise 177. Un ressort 184 est logé dans le boîtier 183, en prenant appui sur l'écrou 181 et en exerçant sur l'assise 177 une poussée verticale dirigée vers le haut. Le dispositif est complété par un système de verrouillage 185, agencé pour pouvoir bloquer l'écrou 181 en rotation.

Pour pouvoir régler la hauteur de l'assise 177, on déverrouille le boîtier 183 par rapport à l'écrou 181 en manoeuvrant le levier 186 du système de verrouillage 185. De ce fait, le ressort 184 pousse vers le haut l'assise 188 et le boîtier 183, qui entraîne l'écrou 181 en rotation dans le sens de la montée, car le rendement du système constitué par l'écrou fileté 181 et le boîtier taraudé 183 est réversible. Le pied 179, 180 restant fixe, l'assise 177 parcourt donc vers le haut le pas de ladite assise par rapport à l'écrou 181, augmenté du pas de ce dernier par rapport à la vis 180. Ainsi, si les deux pas précités sont égaux, l'assise 177 se déplace deux fois plus vite que l'écrou 181. On bloque l'assise 177 et l'ensemble du dispositif dans la position choisie en manoeuvrant le système de verrouillage 185, qui stoppe la rotation de l'écrou 181. Le système de verrouillage 185 comporte essentiellement un patin pourvu d'un taraudage qui coopère avec le filetage 182 et peut être écarté de celui-ci par le levier manuel 186.

Dans ses divers modes de réalisation et applications, l'invention permet le blocage de la pièce mobile dans la position choisie par un effort relativement faible comparativement à ceux supportés par le dispositif.

## Revendications

1 - Dispositif linéaire de réglage rapide et de blocage d'une pièce mobile par rapport à une pièce fixe, caractérisé en ce qu'il comprend au moins un couple d'éléments vis-écrou (48, 45; 52, 51; 56a, 56b; 57...) coopérant avec les deux pièces fixe et mobile (2, 3; 155...), dont l'angle de la ou des vis est suffisamment élevé pour que le rendement de la translation vers la rotation soit légèrement positif, et qui est pourvu de moyens de verrouillage (23, 22, 31,...) de l'élément rotatif du couple après réglage de la position de la pièce mobile.

2 - Dispositif selon la revendication 1, caractérisé en ce que la vis (48) est mobile en translation, fixe en rotation et solidaire de la pièce mobile, et traverse un écrou (45) fixe en translation, guidé en rotation dans un boîtier (46) solidaire de ladite pièce fixe et susceptible d'être muni des moyens de verrouillage de l'écrou (Figure 1).

3 - Dispositif selon la revendication 1, caractérisé en ce qu'il comprend une vis (51) mobile en translation et fixe en rotation, un écrou (51) taraudé et fileté suivant deux pas contraires et une noix (54) taraudée traversée par l'écrou (51), cette noix (54) étant apte à être solidarisée avec la pièce fixe, tandis que la vis (52) est solidaire de la pièce mobile, l'écrou (51) étant mobile à la fois en translation et en rotation lorsqu'un effort axial exercé sur la vis (52) par la pièce mobile, et la noix est susceptible de porter un système de verrouillage de l'écrou (Figure 2).

4 - Dispositif selon la revendication 1, caractérisé en ce qu'il comporte un écrou (57) dans lequel sont agencés deux taraudages de pas contraires et qui coopèrent chacun avec une vis (56a, 56b), ces deux vis ayant des pas inverses, et l'écrou (57) est monté rotatif dans un boîtier (59) de support traversé par les vis (56a, 56b), de telle sorte que, l'une des vis étant solidaire de la pièce mobile, l'écrou soit déplaçable à la fois en rotation et en translation sous l'action de l'effort axial exercé sur la vis solidaire de la pièce mobile à régler, et le boîtier (59) est muni de moyens de verrouillage de l'écrou (Figure 3).

5 - Dispositif selon la revendication 1, caractérisé en ce que la vis (150) porte deux filetages (150a, 150b), à pas contraires qui coopèrent chacun avec un écrou (151, 152) dont l'un est relié à la pièce fixe et l'autre à la pièce mobile à régler, de telle sorte que l'effort exercé sur l'écrou mobile en translation à partir de la pièce mobile déplace la vis (15) à la fois en translation et en rotation, la vis traversant un boîtier (155) pouvant être muni des moyens de verrouillage de ladite vis (Figure 4).

6 - Dispositif selon la revendication 2, caractérosé en ce que les moyens de verrouillage de l'écrou (67) comprennent un verrouilleur (71) monté dans le boîtier (65) coaxialement à la vis (63) autour de celle-ci, pouvant se déplacer axialement et muni d'une denture (73) complémentaire d'une denture (72) de l'écrou (67) afin de verrouiller ce dernier en rotation, ce verrouilleur étant sollicité constamment dans sa position de verrouillage par un organe élastique (74) intérieur au boîtier (65), et des moyens sont prévus pour déverrouiller le verrouiller (71) de l'écrou (67), par exemple un levier manuel (75) articulé autour d'un axe perpendiculaire à la vis (63) et pourvu d'oreilles (76) coopérant avec des ergots (77) solidaires du verrouilleur (71) et saillant latérale ment du boîtier par des lumières (78) de celui-ci, de sorte qu'un basculement du levier (75) entraîne, par l'intermédiaire des ergots (77), un retrait axial du verrouilleur(71) par rapport à l'écrou (67), et donc le déverrouillage de ce dernier (Figures 5 à 7).

7 - Dispositif selon la revendication 6, caractérisé en ce que les dents (73, 72) du verrouilleur (71) et de l'écrou (67) présentent des extrémités pointues (73a, 72a) complémentaires, prolongées latéralement par des plats (73b, 72b) destinés à empêcher un décrabotage naturel.

8 - Dispositif selon la revendication 4, caractérisé en ce que les moyens de verrouillage de l'écrou comprennent un crabot verrouilleur (121) cylindrique, coaxial à la vis (113) et à l'écrou (112), sollicité élastiquement en prise avec une denture conjuguée de l'écrou (112), et associé à un dispositif de commande manuelle du déverrouillage (Figures 15-17).

9 - Actionneur selon la revendication 8, caractérisé en ce que le dispositif de commande du déverrouillage comporte une tôle (127) eveloppant partiellement le boîtier (114) et munie, en regard du verrouilleur-crabot (121), d'ailes latérales (128) aptes à coopérer avec des doigts (129) saillant du verrouilleur-carbot (121) et profilées de façon qu'une rotation de la tôle (127) autour du boîtier (114) provoque, par l'intermédiaire desdites ailes (128), un retrait axial des doigts (129) et du verrouilleur-crabot (121) qui déverrouille l'écrou (112) par rapport à ce dernier (Figures 15-17).

10 - Dispositif selon la revendication 2, caractérisé en ce que le dispositif de commande manuelle de déverrouillage comprend un paire de mâchoires (95) maintenues appliquées sur l'écrou (79) par un organe élastique (99) et susceptible d'être écartées de l'écrou (79) par la rotation d'un levier (101) pourvu à son extrémité de deux doigts (104) coopérant chacun avec une mâchoire (95), de telle sorte que leur rotation autour d'un axe perpendiculaire à la vis (81) écarte les mâchoires (95) l'une de l'autre contre la force de rappel de l'organe élastique (99) ou au contraire autorise leur appui sur l'écrou, en fonction du sens de manoeuvre du levier (101) (Figures 12-14).

11 - Dispositif selon la revendication 2, caractérisé en ce que le dispositif de commande manuelle de déverrouillage comprend au moins deux rouleaux (83; 84) parallèles, interposés entre la surface de l'écrou (79) et un fond du boîtier (82), élastiquement sollicités en appui sur l'écrou de façon à le bloquer en rotation, et des coins (86) engagés entre les extrémités opposées des rouleaux (83, 84), ainsi que des moyens pour faire avancer les coins entre les rouleaux de manière à les écarter et à débloquer ainsi l'écrou (79) ou pour escamoter lesdits coins (86) afin de verrouiller l'écrou (Figures 10-11).

12 - Dispositif selon la revendication 11, caractérisé en ce que lesdits moyens comportent une pince (87) formée par deux mâchoires (88, 89) aux extrémités desquelles sont fixés les coins (86), articulées l'une sur l'autre et dont l'une (89) est de plus articulée sur un élément (92) solidaire du boîtier (82) contenant les rouleaux et les organes élastiques (85) associés, de sorte qu'une traction sur une mâchoire (88) provoque l'insertion des coins (86) entre les rouleaux ou leur retrait (Figures 10-11).

13 - Dispositif selon l'une des revendications 1 à 12, caractérisé en ce que le boîtier est apte à être articulé sur l'assise (3) d'un siège (1) autour d'un axe perpendiculaire à la vis afin de pouvoir basculer autour de cet axe pour suivre les déplacements angulaires du dossier (2), sur lequel la vis est articulée, ou inversement la vis est articulée sur l'assise (3) et le boîtier sur le dossier (2) (Figure 24).

14 - Dispositif selon l'une des revendications 1 à 12, caractérisé en ce que le boîtier est apte à être solidarisé avec une glissière (6) fixée au plancher (35) d'un véhicule et la vis est solidarisée avec l'assise (3) d'un siège, afin de permettre le réglage longitudinal de ladite assise, ou inversement la vis est solidarisée avec la glissière fixe (6) et le boîtier est solidaire de l'assise (3) (Figure 24).

15 - Dispositif selon l'une des revendications 1 à 12, caractérisé en ce que le boîtier (16) est adapté pour être articulé sur une glissière (4, 36) solidaire de l'assise (3) d'un siège (1) de véhicule et pouvant coulisser dans une glissière (6, 37) fixée au plancher (35) du véhicule, tandis que la vis est articulée sur l'assise (3), afind de permettre le réglage de la hauteur de l'assise au-dessus du plancher (35) du véhicule, ou inversement la vis est articulée sur la glissière (4) solidaire de l'assise et le boîtier est articulé sur l'assie (3).

16 - Application du dispositif selon l'une des revendications 1 à 12 au réglage d'un guide (164) de table (165) de machine à bois ou de l'assise (177) d'un tabouret (Figures 29 et 30).

0265317

FIG. 1

FIG. 2

FIG. 3

0265317

FIG. 5

FIG. 6

FIG. 7

FIG. 8

FIG. 4

FIG. 9

0265317

FIG. 10

FIG. 11

FIG. 14

FIG. 13

FIG. 12

0265317

FIG.15

FIG.16

FIG.17

0265317

FIG18

FIG19

0265317

FIG.20

FIG.21

FIG.22

FIG.23

FIG.27

0265317

FIG. 24

FIG.25

FIG.26

0265317

FIG. 28

FIG. 29

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 943 694  (R. GÄRTNER) <br> * Page 1, revendication 1; page 11, paragraphe 2; figures 2,3 * | 1 | F 16 B    1/00 <br> F 16 H   25/20 // <br> B 27 B   27/10 <br> B 60 N    1/06 |
| A | --- | 10 | |
| A | US-A-3 404 581  (KRAUS) <br> * Colonne 5, revendication 1 * <br> --- | 1,4 | |
| A | GB-A-2 042 061  (COMPAGNIE INDUSTRIELLE DE MECANISMES) <br> * Page 3, revendication 3; figures * <br> --- | 1,3,13-15 | |
| A | US-A-2 933 939  (BRANDT) <br> * En entier * <br> --- | 1,2,6 | |
| A | DE-B-1 185 441  (THE ENGLISH ELECTRIC CO.) <br> * Colonne 1, lignes 23-33; figure 1 * <br> --- | 1 | |
| A | US-A-3 640 140  (GULICK et al.) <br> * En entier * <br> --- | 1,6 | |
| A | US-A-3 043 552  (COLANTTI) <br> * En entier * <br> --- | 1,14 | DOMAINES TECHNIQUES RECHERCHES (Int. Cl.4) <br><br> F 16 B <br> F 16 H <br> B 27 B <br> B 60 N |
| A | US-A-2 524 481  (SCHERMULY et al.) <br> * En entier * <br> ----- | 1 | |

Le présent rapport a été établi pour toutes les revendications

| Lieu de la recherche | Date d'achèvement de la recherche | Examinateur |
|---|---|---|
| LA HAYE | 19-01-1988 | MENDE H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

EPO FORM 1503 03.82 (P0402)